# EUROPEAN PATENT SPECIFICATION

(11) **EP 2 488 565 B1**
(45) Date of publication and mention of the grant of the patent: **20.08.2014**
(21) Application number: 10765642.3
(22) Date of filing: 16.10.2010
(51) Int. Cl.: C08G 18/64, C08G 18/78, C08G 18/80, C08G 59/50, C08G 59/54, C08G 59/56, C08G 59/62, C09D 163/00, C09D 163/02

(54) **AQUEOUS STOVING BINDER**
WÄSSRIGER EINBRENNBINDER
LIANT À CUIRE AQUEUX

(30) Priority: 16.10.2009 EP 09173282
(43) Date of publication of application: 22.08.2012
(73) Proprietor: ALLNEX AUSTRIA GmbH, 8402 Werndorf (AT)
(72) Inventor: FEOLA, Roland, A-8045 Graz (AT); PAAR, Willi, A-8010 Graz (AT); GMOSER, Johann, A-8045 Graz (AT); CVETKO, Norbert, A-8010 Graz (AT); SCHIPFER, Rudolf, A-8010 Graz (AT)
(74) Representative: Destryker, Elise Martine
(86) International application number: PCT/EP2010/065576
(87) International publication number: WO 2011/045433

(56) References cited:
- EP-A2- 0 227 942
- WO-A1-00/37571
- DE-A1- 1 645 428
- DE-A1- 3 925 751
- JP-A- 2 011 669
- JP-A- 3 149 217
- US-A- 4 134 864
- US-A1- 2004 242 835

## Description

### Field of the Invention

The invention relates to an aqueous stoving binder. It also relates to a process for its preparation.

### Background of the Invention

Aqueous binders based on epoxy resins are usually cured with polyfunctional curing agents such as polyamines, polyfunctional acids or anhydrides thereof, polyamidoamines, aminoplast resins and phenoplast resins. These curing agents react with functional groups present in the epoxy resin, such as epoxide groups, and hydroxyl groups which stem from the usual chain-extension reactions whereby secondary hydroxyl groups are formed in the growing chain, due to ring opening of an epoxide group.

Coatings based on epoxy resins are used for a plethora of purposes, i. a. for corrosion protection of base metals. Coating compositions used therefor usually comprise also pigments and fillers, particularly such pigments or fillers that enhance the corrosion protection, such as zinc based pigments.

### Summary of the Invention

It is an object of the present invention to further improve the epoxy resin-based coating compositions that are presently used, particularly with regard to pigment wetting, compatibility with substrates such as steel, aluminium, and zinc-coated steel and iron, and lowering the amount of volatile by-products such as blocking agents, also referred to as capping agents, that are liberated upon curing.

It has been found in the investigations that have led to the present invention that a combination of an amide-modified epoxy amine adduct and a capped isocyanate that comprises an allophanate structure forms a water-reducible coating binder that has the desired properties as outlined supra.

The present invention is therefore directed to an aqueous stoving binder comprising a mixture **AB** of an amide-modified epoxy amine adduct **A** and a capped isocyanate **B** that has an allophanate as a structural element.

### Detailed Description of the Preferred Embodiments

The amide-modified epoxy amine adduct **A** is a reaction product of an epoxide functional compound **A1,** of an amidoamine **A3** prepared from a fatty acid **A31** and an amine **A32** having at least one primary or secondary amino group, and of compounds **A2** which are reactive towards epoxide groups which compounds **A2** are selected from amines **A21** having at least one primary or secondary amino group, from phenolic compounds **A22** having at least two phenolic hydroxy groups, and from organic acids **A23,** with the proviso that at least one amine **A21** and at least one phenolic compound **A22** are used in the reaction to prepare the adduct **A.**

The capped isocyanate **B** has at least two capped isocyanate structures -NH-CO-OR and at least one allophanate structure,

R¹-NH-CO-NR²-CO-OR³, wherein

R is the residue of a hydroxy functional capping agent **B21,** also commonly referred to as blocking agent, R-OH, selected from the group consisting of linear aliphatic monohydroxy compounds **B211** having from 1 to 20 carbon atoms, branched aliphatic monohydroxy compounds **B212** having from 4 to 20 carbon atoms, and cyclic aliphatic monohydroxy compounds **B213** having from 4 to 20 carbon atoms, wherein in any of **B211, B212,** and **B213,** one or more methylene groups may be replaced by an ether group, -O-, in a way that two ether groups are separated by at least two consecutive methylene groups which may optionally be substituted, aromatic monohydroxy compounds **B214** such as phenol, alkyl phenols which may be the known cresol and xylenol isomers, 1- and 2-hydroxynaphthalene, or homologues thereof, such as methyl, dimethyl, or ethyl substituted hydroxynaphthalenes, and dialkyl or arylalkyl ketoximes **B215** such as butanonoxime and diethylketoxime and phenylmethylketoxime,
R¹ is the residue of a polyfunctional isocyanate **B11** having n isocyanate groups,

   O=C=N-R¹-(N=C=O) ₙ₋₁,
R² is the residue of a polyfunctional isocyanate **B12** having m isocyanate groups,

   O=C=N-R²-(N=C=O)ₘ₋₁,

   where **B11** and **B12** may be identical or may be different from each other, and are independently selected from the group consisting of aromatic polyfunctional isocyanates, from heteroaromatic polyfunctional isocyanates, from aliphatic polyfunctional isocyanates, and from mixed aromatic-aliphatic polyfunctional isocyanates such as meta-xylylene diisocyanate, and where n and m each can assume integer values of 2 or more, independently from the other in each case, preferably from 2 to 10, and where it is possible that one or more of the isocyanate groups in R¹ and/or in R² may have been consumed by reaction with a hydroxy functional compound under formation of a urethane group, or by reaction with an amino functional compound under formation of a urea group, and
R³ can be the same as R, or can be different from R, and is the residue of a hydroxy functional compound B22 of formula R³-OH, selected from the group consisting of linear aliphatic monohydroxy compounds **B221** having from 1 to 20 carbon atoms such as methanol, n- and sec.-butanol, 1-hexanol, decyl alcohol, tridecylalcohol, and stearylalcohol, branched aliphatic monohydroxy compounds **B222** having from 4 to 20 carbon atoms, such as iso- and tert.-butanol, amyl alcohol, 2-ethyl-1-hexanol, and cyclic aliphatic monohydroxy compounds **B223** having from 4 to 20 carbon atoms, such as hydroxycyclohexane, borneol and isoborneol, wherein in any of **B221, B222,** and **B223,** one or more methylene groups may be replaced by an ether group in a way that two ether groups -O- are separated by at least two consecutive methylene groups, which may optionally be substituted, aromatic monohydroxy compounds **B224** such as phenol, alkyl phenols which may be the known cresol and xylenol isomers, 1- and 2-hydroxynaphthalene, and dialkyl or arylalkyl ketoximes **B225** such as butanonoxime and diethylketoxime and phenylmethylketoxime.

Suitable aromatic polyfunctional isocyanates are 1,4-diisocyanatobenzene, 2,4- or 2,6-diisocyanatotoluene and mixtures of these isomers, 4,4'- or 2,4'-diisocyanatodiphenylmethane, 4,4'-diisocyanatodiphenylpropane-(2,2), 1,2-, 1,4-, 2,3-, and 1,8-diisocyanatonaphthalene.

Suitable heteroaromatic polyfunctional isocyanates are derivatives of melamine or guanamines having at least two isocyanate groups per molecule.

Suitable mixed aromatic-aliphatic polyfunctional isocyanates are preferably alpha,alpha,alpha',alpha'-tetramethyl- m- or -p-xylylene diisocyanate, and mixtures comprising two or more of these compounds.

Suitable aliphatic polyfunctional isocyanates are 1,4-tetramethylene diisocyanate, 1,6-hexamethylene diisocyanate, 1,5-diisocyanato-2-methyl-pentane, 1,8-octamethylene diisocyanate, 2,2,4- or 2,4,4-trimethylhexamethylene-1,6-diisocyanate, 1,12-dodecamethylene diisocyanate, 1,4-diisocyanatocyclohexane, 3-isocyanatomethyl-3,5,5-trimethylcyclohexyl isocyanate (isophorone diisocyanate, IPDI), 4,4'-diisocyanatodicyclohexylmethane, 4,4'-diisocyanatodicyclohexylpropane-(2,2), 1,4-diisocyanatobenzene, 2,4- or 2,6-diisocyanatotoluene and mixtures of these isomers, 4,4'- or 2,4'-diisocyanatodiphenylmethane, 4,4'-diisocyanatodiphenylpropane-(2,2), p-xylylene diisocyanate, alpha, alpha, alpha', alpha'-tetramethylm- or -p-xylylene diisocyanate, and mixtures comprising these compounds.

It is preferred to use an aliphatic isocyanate in combination with ketoxime capping agents **B215** and **B225,** or with phenolic capping agents **B214** or **B224,** while aromatic isocyanates are best combined with aliphatic capping agents according to **B211, B212, B213, B221, B222,** and **B223.**

The epoxides **A1** can be monoepoxides **A11** or diepoxides **A12.** It is also possible to use higher functional epoxides **A13** having three or more epoxide groups per molecule, in a mass fraction of up to 10 %, based on the sum of the masses of epoxide compounds. A higher amount of tri-or polyfunctional epoxides may lead to embrittlement of the coating prepared with the binder of the present invention. Suitable monoepoxides **A11** are ethers of glycidol (2,3-epoxypropanol) with monofunctional aliphatic alcohols having from 4 to 40 carbon atoms, and glycidyl esters of aliphatic monocarboxylic acids having from 5 to 20 carbon atoms, where preferably the alcohols or the acids have at least one tertiary or quaternary carbon atom, and also epoxyalkanes having from 4 to 40 carbon atoms. The epoxide functional compound **A12** has two epoxide groups per molecule. Among the difunctional epoxide compounds, preferred are diepoxyalkanes, ethers of glycidol (2,3-epoxypropanol) with dihydroxy compounds selected from dihydroxyalkanes having from 2 to 20 carbon atoms, which may also be branched or cyclic provided that the lower limit of the number of carbon atoms is 3 for branched and cyclic dihydroxyalkanes, from oligomeric and polymeric dihydroxy alkylene ethers

HO- [- (CH₂)ₙ-O-]ₘ-(CH₂)ₙ-OH

with n = 2 to 4 and m = 1 to 1000, particularly polyoxyethylene glycol and polyoxypropylene glycol and also mixed ethers of these, and polyoxybutylene glycol, and from dihydroxyaromatic compounds having at least one aromatic ring, which aromatic compounds are preferably selected from the group consisting of resorcinol, hydroquinone, the isomeric dihydroxynaphthalenes, bisphenol A, bisphenol F, alkylated bisphenol A such as tetramethyl bisphenol A, halogenated bisphenol A, dihydroxy diphenyl, dihydroxybenzophenone, dihydroxy diphenyl sulphone, and dihydroxy diphenyl ether, esters of glycidol with organic alkylene diacids having from 1 to 40 carbon atoms in the alkylene residue which may be linear, branched or cyclic, particularly preferably dicarboxylic acids such as succinic acid, adipic acid, and dimeric fatty acids, and esters of aromatic diacids such as isophthalic or terephthalic acids. Especially preferred are the diglycidyl ethers of bisphenol A and bisphenol F and the so-called advancement products thereof which are made by reacting bisphenol A or bisphenol F with the diglycidyl ether of bisphenol A or bisphenol F.

Preferably, the amine **A21** having at least one primary or secondary amino group has the amino group(s) bound to an aliphatic carbon atom, and has from 2 to 40 carbon atoms. The amine **A21** may be an araliphatic amine such as m-xylylene diamine, a hydroxyamine **A211** having at least one primary or secondary amino group and at least one hydroxyl group, such as ethanolamine, diethanolamine, dipropanolamine, 4-hydroxybutylamine, N-methyl ethanolamine, N-ethyl ethanolamine, an amine **A212** having at least one primary and at least one tertiary amino group such as N,N-dimethylaminopropylamine, N,N-diethylaminopropylamine, N-(2-aminoethyl) piperidine, N-(2-aminoethyl) pyrrolidine, and N-(2-aminoethyl) piperazine, or particularly preferred an amine **A213** having at least two primary and at least one secondary amino group, such as diethylene triamine, triethylene tetramine, tetraethylene pentamine and pentaethylene hexamine, oligomeric or polymeric diaminopolyethylene imine having a degree of polymerisation of from 6 to 100, dipropylene triamine, and tripropylene tetramine, and N,N-bis-(4-aminobutyl)-amine, N,N'-bis-(4-aminobutyl)-1,4-diaminobutane, as well as N,N-bis-(6-aminohexyl)-amine, and N,N'-bis-(6-aminohexyl)-1,6-diaminohexane. It is also preferred to use mixtures of at least two of the amines as mentioned.

The phenolic compound **A22** can be a mono- or di-hydroxy aromatic compound. Preferred are phenol itself, the isomeric cresols, particularly o- and p-cresol, and xylenols, particularly 2,6-xylenol, and among the dihydroxyaromatic compounds, resorcinol, hydroquinone, dihydroxydiphenyl, dihydroxydiphenyl ether, dihydroxydiphenylsulphone, dihydroxybenzophenone, 2,2-bis-(4-hydroxyphenyl) propane (= bisphenol A), 2,2-bis-(4-hydroxyphenyl) methane (= bisphenol F), and 2,2-bis-(4-hydroxy-3,5-dimethylphenyl) propane (= tetramethyl bisphenol A), as well as other alkylated or halogenated derivatives of the compounds mentioned, and mixtures of at last two of these.

The organic acid **A23** can be preferably an aliphatic monocarboxylic acid having from 2 to 40 carbon atoms, which can be linear, branched (with a minimum of 4 carbon atoms) or cyclic (with a minimum of 5 carbon atoms), and may further preferably have at least one olefinic unsaturation. Particularly preferred are unsaturated fatty acids such as oleic acid, linolic acid, linolenic acid, palmitoleic acid, erucic acid, and ricinoleic acid, as well as mix-tures of fatty acids made from naturally occurring sources, which mixtures preferably comprise a mass fraction of at least 20 %, particularly preferred of at least 30 %, of unsaturated fatty acids. Among the fatty acid mixtures obtained from natural oils, linseed oil fatty acid and tall oil fatty acid are especially preferred.

The amidoamine **A3** has at least one primary or secondary amino group and at least one amide group, and is derived from fatty acids **A31** having one carboxyl functional group and from 6 to 40 carbon atoms, preferably from 8 to 36 carbon atoms, and may also comprise olefinic double bonds in their molecules which are preferentially nonconjugated if there is more than one per molecule, and from amines **A32** having at least two amino groups, at least one thereof being a primary amino group, which may be selected from amines **A321** having at least one primary and at least one secondary amino group, such as N-methylethylene diamine, N-(2-aminoethyl) pyrrolidine, and N-(2-aminoethyl) piperazine, and from amines **A322** having at least two primary amino groups, such as ethylene diamine, diethylene triamine, triethylene tetramine, tetraethylene pentamine and pentaethylene hexamine, oligomeric or polymeric diaminopolyethylene imine having a degree of polymerisation of from 6 to 100, dipropylene triamine, and tripropylene tetramine, and N,N-bis-(4-amino-butyl)-amine, N,N'-bis-(4-aminobutyl)-1,4-diaminobutane, as well as N,N-bis-(6-aminohexyl)-amine, and N,N'-bis-(6-aminohexyl)-1,6-diaminohexane.

Preferred fatty acids **A31** are the saturated monocarboxylic acids caproic acid, enanthic acid, caprylic acid, pelargonic acid, capric acid, undecanoic acid, lauric acid, tridecanoic acid, myristic acid, pentadecanoic acid, palmitic acid, margaric acid, stearic acid, nonadecanoic acid, arachidic acid, behenic acid, lignoceric acid, cerotic acid, montanic acid, and melissic acid, the unsaturated acids myristoleic acid, palmitoleic alic, petroselinic acid, petroselaidic acid, oleic acid, elaidic acid, linoleic acid, linolelaidic acid, linolenic acid, linolenelaidic acid, gadoleic acid, arachidonic acid, erucic acid, brassidic acid, and clupanodonic acid. Mixtures of these acids, particularly those that are naturally occurring and commercially available in purified form or in broad cuts from naturally occurring vegetable oil fatty acid mixtures, such as tall oil, soy bean oil, cottonseed oil, castor oil, linseed oil, palm kernel oil, corn oil, peanut oil, rapeseed oil, sunflower oil, and cocoanut oil fatty acids, are also preferred.

The aqueous self-cross-linking binder is preferably made by the following process:

In the first step, a fatty acid amidoamine **A3** is prepared from a fatty acid **A31** and an amine **A32** as defined supra. The amounts of the reactants **A31** and **A32** are chosen such that the fatty acid amidoamine **A3** has at least one remaining primary or secondary amino group.

These amino-functional fatty acid amidoamines **A3** are then mixed in the second step with at least two different compounds of the class **A2,** and a first portion of the epoxide **A1** is added, which is in this second step preferably predominantly (i. e. with a mass fraction of more than 50 % of the epoxide compounds used in this step) a monoepoxide **All,** or a mixture of two or more monoepoxides, and the mixture thus obtained is heated to a temperature of preferably from 60 °C to 100 °C and reacted until no more epoxide groups can be detected.

In the third step, in an optional preferred embodiment, a further quantity of at least one of the compounds according to **A2** is then added, and then mandatorily, a second portion of the epoxide compound **A1** is added, which in this third step is preferably a diepoxide **A12,** optionally with admixture of an epoxide **A13** having a functionality of more than two, and the reaction mass is treated at the same temperature as above until all epoxide groups have been consumed.

In a separate step, a curing agent is prepared from an at least difunctional isocyanate **B1** and a capping agent **B2** by first charging the capping agent **B2** and admixing a catalyst, the mixture is heated and the isocyanate **B1** is added in portions keeping the temperature constant, and reacting until the isocyanate groups are completely consumed.

In the fourth step, the curing agent formed in the separate step is added to the reaction mixture of step 3, homogenised well, and the resulting homogeneous mixture is cooled and dispersed in water to which a neutralisation agent has been added prior to the addition of the homogenised mixture.

In a further optional step, further diepoxide **A12** is added and reacted again until all epoxide groups have been consumed.

A preferred reaction sequence provides that in the second step, only a portion of the amine **A21** is added, while the remaining amine **A21** is added before the third step.

It has been found in the experiments leading to the present invention that a ratio of the amounts of substance of monoepoxides **A11** to diepoxides **A12** of from 1:1.5 to 1:5 leads to the best corrosion protection. Preferred ratios are 1:2 to 1:4.5, and particularly preferred, 1:2.5 to 1:4.

Good corrosion protection can also be provided if the ratio of the amounts of substance for the two portions of diepoxide **A12** in the third step and the optional step after step 4 are within the limits of from 10:1 to 4:1, preferably between from 9.5:1 to 5:1, and particularly preferred, between from 9:1 to 6:1.

Preferably, there is no residual amount of amine hydrogen atoms in the binders left as these have all been converted to tertiary amino groups by reaction with the epoxides. Therefore, the amount of epoxides has to be chosen to at least convert all of the amino groups to tertiary amino groups.

The amount of monoepoxide **A11** in the second step is preferably chosen such that from 4 % to 30 %, especially preferred from 6 % to 20 %, of all aminic NH groups are converted to beta-hydroxyamine structures by addition of monoepoxide **A11.**

The hydroxyl number of the binders is preferably in the range of from 20 mg/g to 150 mg/g, particularly preferably from 30 mg/g to 120 mg/g.

Coatings prepared with the binders of this invention provide good corrosion protection to base metals, be it steel, aluminium, or zinc, to name only a few, and they exhibit good pigmnet wetting both with inorganic pigments such as ultramarine pigments, titanium dioxide, and iron oxide pigments, and also organic pigments, such as quinacridone and phthalocyanine pigments.

A particularly important property is the low amount of organic compounds split off during curing. In combination with non-allophanate curing agents, a higher amount of blocked isocyanate has to be used to achieve the same degree of crosslinking; this leads both to an increase in the amount of volatile products evolved during the crosslinking reaction, and to a loss in stability of the dispersion in combination with the amide-modified epoxy amine adduct **A** of the present invention.

The invention is further illustrated by the following examples which are not intended to be limiting.

### Examples

### Example 1 Preparation of fatty acid amidoamines

A fatty acid amide containing amino groups was synthesised according to the following procedure:
215 g (1 mol) of bis-hexamethylene triamine (BHMTA) were heated to 40 °C. 560 g (2 mol) of tall oil fatty acid (TOFA) were added under stirring during fifteen minutes; thereafter the mixture was heated, profiting of the slight exotherm, to 150 °C within one hour. The water formed in the reaction was separated, and the mixture was held at 150 °C for a further three hours, and then heated to 180 °C over a period of two further hours. The reaction mixture was held at that temperature until an amine value (determined according to DIN 53 176, as the ratio of that mass ***m***(KOH) of potassium hydroxide that consumes the same amount of acid for neutralisation as the sample under consideration, and the mass *m*(B) of that sample, or the mass of solid matter in the sample in the case of solutions or dispersions) of approximately 76 mg/g was reached, which corresponds to an amount of substance of 1 mol in this experiment. A waxy brown solid was obtained having an amine value of 75.3 mg/g and an acid value of 8.1 mg/g.

The acid value was determined according to DIN EN ISO 3682 (DIN 53 402), as the ratio of that mass ***m***(KOH) of potassium hydroxide which is needed to neutralise the sample under examination, and the mass m(B) of this sample, or the mass of the solids in the sample in the case of a solution or dispersion; its customary unit is "mg/g".

Further fatty acid amides 1.2 to 1.5 were synthesised according to the same procedure, with kind and mass of educts (starting materials) as indicated in table 1. The following abbreviations are used in the row "kind" for amines ¹ and fatty acids ²:
- BHMTA: bis-hexamethylene triamine
- DETA: diethylene triamine
- TETA: triethylene tetramine
- POFA: peanut oil fatty acid, <M> = 280 g/mol
- INA: isononanoic acid, M = 158 g/mol
- TOFA: tall oil fatty acid, <M> = 280 g/mol,

M denoting the molar mass, and <M> the number average molar mass of the compounds supra.

**Table 1 Fatty Acid Amidoamines**

| Fatty Acid Amidoamine | | 1.2 | 1.3 | 1.4 | 1.5 |
|---|---|---|---|---|---|
| Amine | mass in g | 215 | 103 | 146 | 146 |
| | amount of substance in mol | 1 | 1 | 1 | 1 |
| | kind¹ | BHMTA | DETA | TETA | TETA |
| Fatty Acid | mass in g | 560 | 316 | 560 | 316 |
| | amount of substance in mol | 2 | 2 | 2 | 2 |
| | kind² | POFA | INA | TOFA | INA |
| Product | mass in g | 739 | 383 | 670 | 426 |
| | amine value in mg/g | 74.8 | 144 | 164.9 | 261.9 |
| | residual acid value in mg/g | 6.9 | 7.7 | 6.0 | 7.4 |

A comparative compound V (a hydroxy amine) was also synthesised by reaction of 1 mol of hexamethylene diamine and 2 mol of the glycidyl ester (available as ®Cardura E10P from Hexion Specialty Chemicals) of a mixture of branched decanoic acids (also referred to as "Neodecanoic Acid").

### Example 2 Amide-modified epoxy resins

Binder B1 was synthesised according to the following procedure: 739 g (1 mol) of the amine-functional fatty acid amide 1.2 from Example 1 were mixed with 280 g (1 mol) of tall oil fatty acid and 215 g of bis-hexamethylene triamine (1 mol) and 1093 g of methoxypropanol as solvent at 90 °C and stirred until a clear melt had formed. Within one hour, 774 g (3.1 mol) of the glycidyl ester of neodecanoic acid were added while holding the temperature between 85 °C and 90 °C by cooling. After one further hour of stirring at 85 °C at 85 °C, the following products were added in sequence: 968 g (4.24 mol) of bisphenol A (BA), 206 g (1.96 mol) of diethanolamine (DOLA), and 184 g (1.8 mol) of dimethylamino propylamine (DMAPA). When a clear melt was obtained at 80°C, a first portion of 3230 g (8.5 mol) of a liquid epoxide resin based on bisphenol A and having a molar mass of 380 g/mol were added, the temperature rising due to the heat of reaction to about 150 °C. The reaction mixture was held at 150 °C for about one hour until no unreacted epoxide groups were detectable. A dilution vessel was prepared by charging a mixture of 8800 g of deionised water and 450 g of an aqueous solution of acetic acid (having a concentration of 60 g/100 g, 3 mol), the resin solution was then added within thirty minutes under stirring. Temperature was then set to 70 °C, and stirring was continued for one further hour until a homogeneous dispersion was obtained. Water was added in portions to a final mass fraction of solids of 45 %. The dispersion thus obtained was heated to 80 °C, and a second portion of 400 g (1.05 mol) of the epoxy resin mentioned supra was added and the resulting mixture held under stirring at a temperature of from 70 °C to 80 °C until no free epoxide groups were detectable any more. The resulting product had a Staudinger index of 60 cm³/g.

Further binders were made according to table 2:

The following abbreviations were used:
CE: ®Cardura E10 P (glycidyl ester of neodecanoic acid)
EP: bisphenol A diglycidyl ether (M = 380 g/mol)
***m***/g: mass of the component in g
***n***/mol: amount of substance of the component in mol

**Table 2: Amide-Modified Epoxy Resins**

| Exam ple | Fatty Acid Amidoamine | | | Components reactive towards epoxide groups | | | Epoxy Resins | | |
|---|---|---|---|---|---|---|---|---|---|
| | ***m***/g | ***n***/mol | Kind | ***m***/g | ***n***/mol | Kind | ***m***/g | ***n***/mol | Kind |
| 2.1 | 739 | 1 | 1.2 | 280 | 1 | TOFA | 750 | 3 | CE |
| | | | | 215 | 1 | BHMTA | 3420 | 9 | EP |
| | | | | 935 | 4.1 | BA | | | |
| | | | | 210 | 2 | DOLA | | | |
| | | | | 184 | 1.8 | DMAPA | | | |
| | | | | | | | | | |
| 2.2 | 739 | 1 | 1.1 | 560 | 2 | TOFA | 3230 | 8.5 | EP |
| | | | | 935 | 4.1 | BA | | | |
| | | | | 210 | 2 | DOLA | | | |
| | | | | 184 | 1.8 | DMAPA | | | |
| | | | | | | | | | |
| 2.3 | 1340 | 2 | 1.4 | 912 | 4 | BA | 500 | 2 | CE |
| | | | | 210 | 2 | DOLA | 3230 | 8.5 | EP |
| | | | | 184 | 1.8 | DMAPA | | | |
| | | | | | | | | | |
| 2.4 | 852 | 2 | 1.5 | 912 | 4 | BA | 500 | 2 | CE |
| | | | | 210 | 2 | DOLA | 3230 | 8.5 | EP |
| | | | | 184 | 1.8 | DMAPA | | | |
| | | | | | | | | | |
| 2.5 | 766 | 2 | 1.3 | 560 | 2 | TOFA | 250 | 1 | CE |
| | | | | 935 | 4.1 | BA | 3230 | 8.5 | EP |
| | | | | 210 | 2 | DOLA | | | |
| | | | | 184 | 1.8 | DMAPA | | | |
| | | | | | | | | | |
| 2.6 | 739 | 1 | 1.1 | 560 | 2 | TOFA | 250 | 1 | CE |
| | | | | 935 | 4.1 | BA | 3230 | 8.5 | EP |
| | | | | 210 | 2 | DOLA | | | |
| | | | | 184 | 1.8 | DMAPA | | | |
| | | | | | | | | | |
| 2.7 | 616 | 1 | V | 560 | 2 | TOFA | 250 | 1 | CE |
| | | | | 935 | 4.1 | BA | 3230 | 8.5 | EP |
| | | | | 210 | 2 | DOLA | | | |
| | | | | 184 | 1.8 | DMAPA | | | |
| | | | | | | | | | |
| 2.8 | 739 | 1 | 1.1 | 560 | 2 | TOFA | 250 | 1 | CE |
| | | | | 935 | 4.1 | BA | 3230 | 8.5 | EP |
| | | | | 210 | 2 | DOLA | | | |
| | | | | 184 | 1.8 | DMAPA | | | |
| | | | | | | | | | |
| 2.9 | 739 | 1 | 1.1 | 560 | 2 | TOFA | 250 | 1 | CE |
| | | | | 935 | 4.1 | BA | 3230 | 8.5 | EP |
| | | | | 210 | 2 | DOLA | | | |
| | | | | 184 | 1.8 | DMAPA | | | |

1.1 to 1.5: Fatty acid amidoamines from Example 1
V is an adduct made of 1 mol of HDA and 2 mol of ®Cardura E10 P, see supra,

The resins prepared were neutralised and had the physico-chemical properties as shown in table 3:

**Table 3 Neutralisation and Physico-chemical Properties of the Resins**

| Binder | Neutralisation agent (Acetic Acid) | | Solid Resin | Mass Fraction of Solids | Viscosity at 23 °C |
|---|---|---|---|---|---|
| | ***m***/g | ***n***/mol | ***m***/g | ***w***/% | η/mPa·s |
| 2.1 | 156 | 2.6 | 9841 | 38.2 | 620 |
| 2.2 | 162 | 2.7 | 8600 | 38.1 | 430 |
| 2.3 | 180 | 3 | 9366 | 37.8 | 380 |
| 2.4 | 180 | 3 | 8668 | 40.4 | 522 |
| 2.5 | 162 | 2.7 | 8996 | 36.3 | 627 |
| 2.6 | 162 | 2.7 | 8957 | 39.7 | 583 |
| 2.7 | 156 | 2.6 | 8773 | 39.5 | 433 |
| 2.8 | 162 | 2.7 | 8957 | 39.7 | 583 |
| 2.9 | 162 | 2.7 | 12256 | 40.1 | 338 |

η is the usual symbol for the dynamic viscosity which is measured at a shear rate of 100 s⁻¹.

### Example 3 Preparation of allophanate-containing isocyanatefunctional crosslinking agents

1430 g (11 mol) of 2-ethyl hexanol and 3.1 g of sodium phenolate were charged in a glass vessel and heated to 80 °C. 1740 g (10 mol) of 2,4-toluylene diisocyanate were added in portions under cooling to keep the temperature in the range of from 80 °C to 85 °C. When the whole amount of diisocyanate had been added, the reaction mass was kept at from 80 °C to 90 °C until complete consumption of the isocyanate groups. An allophanate-containing oligomeric isocyanate having an average molar mass of 3170 g/mol and a specific content of crosslinking isocyanate groups of 6.33 mol/kg was obtained.

### Example 4 Comparative Crosslinking Agent

A comparative crosslinking agent was synthesised by reacting 134 g (1 mol) of trimethylolpropane with 851 g (2.8 mol) of a toluylene diisocyanate which was semi-blocked with 2-ethyl hexanol. This crosslinking agent was free of allophanate groups. It specific content of crosslinking isocyanate groups was 2.84 mol/kg.

### Example 5 Coating Compositions

Mixtures were prepared from the binders 2.1 through 2.9, and crosslinking agents of Example 3 (according to the invention) and the comparative crosslinking agent of example 4. Binders 2.1 to 2.6, 2.8 and 2.9 are according to the invention, while binder 2.7 was made without the amide component. These mixtures are detailed in Table 4.

**Table 4 Coating Compositions**

| Paint Binder | | | Crosslinker | | Amount of Substance of Isocyanate groups | Ratio of masses of solids of crosslinker XL and binder B | Stoving loss |
|---|---|---|---|---|---|---|---|
| | kind | ***m***(B) in g | kind | ***m***(XL) in g | ***n***(NCO) in mol | ***m***(XL)/***m***(B) in % | ***w***_{ST} in % |
| 1 | 2.1 | 9841 | Ex. 3 | 2952 | 18.7 | 30 | 13.5 |
| 2 | 2.2 | 8600 | Ex. 3 | 2580 | 16.3 | 30 | 13.5 |
| 3 | 2.3 | 9366 | Ex. 3 | 2810 | 17.8 | 30 | 13.5 |
| 4 | 2.4 | 8668 | Ex. 3 | 2600 | 16.4 | 30 | 13.5 |
| 5 | 2.5 | 8996 | Ex. 3 | 2699 | 17.1 | 30 | 13.5 |
| 6 | 2.6 | 8957 | Ex. 3 | 2687 | 17.0 | 30 | 13.5 |
| 7 | 2.7 | 8773 | Ex. 3 | 2632 | 16.6 | 30 | 13.5 |
| 8 | 2.8 | 8957 | Ex. 4 | 2687 | 7.6 | 30 | 11.1 |
| 9 | 2.9 | 12256 | Ex. 4 | 5986 | 17.0 | 49 | 18.1 |

| | | | | | | | |
|---|---|---|---|---|---|---|---|
| m(B) is the mass of solids in the binder ***m***(XL) is the mass of solids in the crosslinking agent ***w***_{ST} :Stoving Loss, ratio of masses of volatiles split off during stoving and mass of coating composition solids in % | | | | | | | |

### Example 6 Coating Test Results

For the coating compositions (paints) of example 5, the composition of which is given in table 4, the following tests were made:
a) Sieve Test: 1 kg of the coating compositions were passed through a sieve having a mesh width of 28 µm, the amount of sediment was weighed and stated as ratio of mass of sediment to mass of paint, in mg/kg
b) Appearance of coated substrate, using three different kinds of substrate, aluminium panels (b1), ®Gardobond test panels S26/6800 OC (steel, zinc coated and phosphatised) (b2), and ®Gardobond test panels S26/6800 OC (steel,electrolytically zinc coated) (b3) ; the substates were used as obtained, and rinsed with deionised water prior to coating
   The ratings for appearance are:
   "0" glossy, smooth
   "1" silky gloss
   "2" glossy, single pinholes
   "3" matte
   "4" matte, single pinholes
   "5" matte, grainy
c) Cross Hatch Test of coated substrate, using three different kinds of substrate, aluminium panels (b1), ®Gardobond test panels S26/6800 OC (steel, zinc coated and phosphatised) (b2), and ®Gardobond test panels S26/6800 OC (steel,electrolytically zinc coated) (b3); the substates were used as obtained, and rinsed with deionised water prior to coating. Rating is according to the norm, Method B of ASTM D3359.
d) reverse impact test according to ISO 6272, using steel sheets, zinc coated and phosphatised, results are given in the commonly used non-SI units, and converted to SI units (1 in·lb = 0.113 J)
e) salt spray test, where a steel sheet coated with zinc and phosphatised is subjected to salt spray according to DIN EN ISO 7253, degree of rust formation e1 classified as
   "0" no rust staining
   "1" single rust stains
   "2" about 20 % of the surface are covered with rust stains
   "3" more than 50 % of the surface are covered with rust stains
   "4" rust covers the whole surface,
and e2 states the distance of the corrosion creep front from a scratch in the paint film.

Dry film thickness was 22 µm in all cases. The following test results were obtained with the paints (coating compositions) binders 1 to 9:

**Table 5 Coating tests**

| | | | | | | | | | | |
|---|---|---|---|---|---|---|---|---|---|---|
| Paint | | 1 | 2 | 3 | 4 | 5 | 6 | 7 | 8 | 9 |
| Sieve Test | a in mg/kg | 7 | 8 | 10 | 3 | 4 | 8 | 30 | 5 | >100 |
| Appearance of Coated Surface | b1 | 0 | 0 | 0 | 0 | 0 | 0 | 4 | 2 | 5 |
| | b2 | 1 | 1 | 1 | 1 | 1 | 1 | 3 | 0 | 5 |
| | b3 | 1 | 1 | 1 | 1 | 1 | 1 | 3 | 0 | 5 |
| Cross Hatch Test | c1 | 0 | 0 | 0 | 0 | 0 | 2..3 | 0 | 3 | 2 |
| | c2 | 0 | 0 | 0 | 0 | 0 | | 1 | 1..2 | 0..1 |
| | c3 | 0 | 0 | 0 | 0 | 0..1 | | | 2..2 | 2 |
| Reverse Impact | d in J (in·lb) | 9.0 | 9.0 | 9.0 | 9.0 | 9.0 | 9.0 | 9.0 | 1.1 | 5.7 |
| Salt Spray | e1 | 1 | 1 | 1 | 1 | 1 | 1 | 1 | 2 | 2..3 |
| Test | e2 in mm | 1 | 1 | 1..2 | 1..2 | 1..2 | 2 | 2 | 2 | 2..3 |

It can be seen that the surface appearance is improved by the use of amide-containing epoxy amine adducts as binders (paints 7, without amide; vs. paints 1 to 6, with amide). The same is true for the results of the cross-hatch test.

Numbers in the table in the format "2 .. 3" mean that the value is between 2 and 3, etc.

Using a comparative crosslinking agent which does not comprise allophanate groups (Paint 8) in the same amount as the allophanate containing crosslinker (Paints 1 to 6) together with a binder comprising an amide component in the epoxy amine adduct gives much lower impact values, and marked reduced protection against corrosion, as evidenced by the salt spray test results. There is also worse performance in the cross-hatch test.

If the amount of comparative crosslinker is increased according to the stoichiometry (Paint 9), the impact is improved over that with paint 8, and so are the results of the cross-hatch test, but still not as good as in paints 1 to 6. It can also be noted that the surface appearance is gravely impaired, as well as the corrosion test results.

## Claims

1. An aqueous stoving binder comprising a mixture **AB** of an amide-modified epoxy amine adduct **A** and a capped isocyanate **B** that has an allophanate as a structural element wherein the amide-modified epoxy amine adduct **A** is a reaction product of an epoxide functional compound **A1,** of an amidoamine **A3** prepared from a fatty acid **A31** and an amine **A32** having at least two amino groups, at least one being a primary amino group, and of compounds **A2** which are reactive towards epoxide groups which compounds **A2** are selected from amines **A21** having at least two amino groups, where at least one is a primary amino group, from phenolic compounds **A22** having at least two phenolic hydroxy groups, and from organic acids **A23,** with the proviso that at least one amine **A21** and at least one phenolic compound **A22** are used in the reaction to prepare the adduct **A.**

2. The aqueous stoving binder of claim 1 wherein the epoxides **A1** are monoepoxides **A11** or diepoxides **A12,** optionally in combination with higher functional epoxides **A13** having three or more epoxide groups per molecule, in a mass fraction of up to 10 %, based on the sum of the masses of epoxide compounds.

3. The aqueous stoving binder of claim 1 wherein the capped isocyanate **B** has at least two capped isocyanate structures -NH-CO-OR and at least one allophanate structure, R¹-NH-CO-NR²-CO-OR³, wherein
R is the residue of a hydroxy functional capping agent **B21,** also commonly referred to as blocking agent, R-OH, selected from the group consisting of linear aliphatic monohydroxy compounds **B211** having from 1 to 20 carbon atoms, branched aliphatic monohydroxy compounds **B212** having from 4 to 20 carbon atoms, and cyclic aliphatic monohydroxy compounds **B213** having from 4 to 20 carbon atoms, wherein in any of **B211, B212,** and **B213,** one or more methylene groups may be replaced by an ether group, -O-, in a way that two ether groups are separated by at least two consecutive methylene groups which may optionally be substituted, aromatic monohydroxy compounds **B214,** and dialkyl or arylalkyl ketoximes **B215,**
R¹ is the residue of a polyfunctional isocyanate **B11** having n isocyanate groups,
O=C=N-R¹-(N=C=O)ₙ₋₁,
R² is the residue of a polyfunctional isocyanate **B12** having m isocyanate groups,
O=C=N-R²-(N=C=O)ₘ₋₁,
where **B11** and **B12** may be identical or may be different from each other, and are independently selected from the group consisting of aromatic polyfunctional isocyanates, from heteroaromatic polyfunctional isocyanates, from aliphatic polyfunctional isocyanates, and from mixed aromatic-aliphatic polyfunctional isocyanates such as meta-xylylene diisocyanate, and where n and m each can assume integer values of 2 or more, independently from the other in each case, preferably from 2 to 10, and where it is possible that one or more of the isocyanate groups in R¹ and/or in R² may have been consumed by reaction with a hydroxy functional compound under formation of a urethane group, or by reaction with an amino functional compound under formation of a urea group, and
R³ can be the same as R, or can be different from R, and is the residue of a hydroxy functional compound **B22** of formula R³-OH, selected from the group consisting of linear aliphatic monohydroxy compounds **B221** having from 1 to 20 carbon atoms, branched aliphatic monohydroxy compounds **B222** having from 4 to 20 carbon atoms, and cyclic aliphatic monohydroxy compounds **B223** having from 4 to 20 carbon atoms, wherein in any of **B221, B222,** and **B223,** one or more methylene groups may be replaced by an ether group in a way that two ether groups -O- are separated by at least two consecutive methylene groups, which may optionally be substituted, aromatic monohydroxy compounds **B224,** and dialkyl or arylalkyl ketoximes **B225.**

4. The aqueous stoving binder of claim 3 wherein the aromatic polyfunctional isocyanates are selected from the group consisting of 1,4-diisocyanatobenzene, 2,4- and 2,6-diisocyanatotoluene, mixtures of these isomers, 4,4'- and 2,4'-diisocyanatodiphenylmethane, 4,4'-diisocyanatodiphenylpropane-(2,2), 1,2-, 1,4-, 2,3-, and 1,8-diisocyanatonaphthalene.

5. The aqueous stoving binder of claim 3 wherein the heteroaromatic polyfunctional isocyanates are derivatives of melamine or guanamines having at least two isocyanate groups per molecule.

6. The aqueous stoving binder of claim 3 wherein the mixed aromatic-aliphatic polyfunctional isocyanates are selected from the group consisting of alpha,alpha,alpha',alpha'-tetramethyl-m- and -p-xylylene diisocyanate, and mixtures comprising at least two of these compounds.

7. The aqueous stoving binder of claim 3 wherein the aliphatic polyfunctional isocyanates are selected from the group consisting of 1,4-tetramethylene diisocyanate, 1,6-hexamethylene diisocyanate, 1,5-diisocyanato-2-methyl-pentane, 1,8-octamethylene diisocyanate, 2,2,4- and 2,4,4-trimethylhexamethylene-1,6-diisocyanate, 1,12-dodecamethylene diisocyanate, 1,4-diisocyanatocyclohexane, 3-isocyanatomethyl-3,5,5-trimethylcyclohexyl isocyanate (isophorone diisocyanate, IPDI), 4,4'-diisocyanatodicyclohexylmethane, 4,4'-diisocyanatodicyclohexylpropane-(2,2), 1,4-diisocyanatobenzene, 2,4- or 2,6-diisocyanatotoluene and mixtures of these isomers, 4,4'- or 2,4'-diisocyanatodiphenylmethane, 4,4'-diisocyanatodiphenylpropane-(2,2), p-xylylene diisocyanate, alpha, alpha, alpha', alpha'-tetramethyl-m- or -p-xylylene diisocyanate, and mixtures comprising these compounds.

8. The aqueous stoving binder of claim 3 wherein an aliphatic isocyanate is used in combination with ketoxime capping agents **B215** and **B225,** or with phenolic capping agents **B214** or **B224.**

9. The aqueous stoving binder of claim 3 wherein an aromatic isocyanates is used combined with one or more aliphatic capping agents selected from the group consisting of **B211, B212, B213, B221, B222,** and **B223** as detailed in claim 3.

10. The aqueous stoving binder of claim 2 wherein the epoxides **A1** are selected from the group consisting of monoepoxides **A11** and diepoxides **A12,** wherein the monoepoxides **A11** are selected from the group consisting of monoepoxyalkanes, ethers of glycidol with monofunctional aliphatic alcohols having from 4 to 40 carbon atoms, and glycidyl esters of aliphatic monocarboxylic acids having from 5 to 20 carbon atoms, and wherein the diepoxide **A12** has two epoxide groups per molecule and is selected from the group consisting of diepoxyalkanes, ethers of glycidol with dihydroxy compounds selected from dihydroxyalkanes having from 2 to 20 carbon atoms, from oligomeric and polymeric dihydroxy alkylene ethers
HO-[-(CH₂)ₙ-O-]ₘ-(CH₂)ₙ-OH
with n = 2 to 4 and m = 1 to 1000, and from dihydroxyaromatic compounds having at least one aromatic ring, esters of glycidol with organic arylene diacids and alkylene diacids having each from 1 to 40 carbon atoms in the arylene or alkylene residue which latter may be linear, branched or cyclic.

11. The aqueous stoving binder of claim 1 wherein the amine A21 has at least one primary or secondary amino group which are bound to an aliphatic carbon atom, and has from 2 to 40 carbon atoms.

12. The aqueous stoving binder of claim 1 wherein the phenolic compound A22 is a mono- or di-hydroxy aromatic compound.

13. The aqueous stoving binder of claim 1 wherein the organic acid **A23** is a saturated or an unsaturated aliphatic monocarboxylic acid having from 2 to 40 carbon atoms.

14. The aqueous stoving binder of claim 1 wherein the amidoamine **A3** has at least one primary or secondary amino group and at least one amide group, and is derived from saturated or unsaturated fatty acids **A31** having from 6 to 40 carbon atoms, and from amines **A32** having at least two amino groups, and at least one being a primary amino group, selected from amines **A321** having at least one primary and at least one secondary amino group, and from amines **A322** having at least two primary amino groups.

15. A process to make an aqueous stoving binder of claim 1 comprising the steps of
- in the first step, a fatty acid amidoamine **A3** is prepared from a fatty acid **A31** and an amine **A32** having at least two amino groups, at least one being a primary amino group, wherein the amounts of the reactants **A31** and **A32** are chosen such that the amide **A3** has at least one remaining primary or secondary amino group,
- mixing these amino-functional fatty acid amides **A3** in the second step with at least two different compounds of the class **A2** selected from amines **A21** having at least two amino groups, where at least one is a primary amino group, from phenolic compounds **A22** having at least two phenolic hydroxy groups, and from organic acids **A23,** with the proviso that at least one amine **A21** and at least one phenolic compound **A22** is used, and a first portion of a monofunctional epoxide **A1** is added, and the mixture thus obtained is reacted until no more epoxide groups can be detected,
- in an optional step, a further quantity of one of the compounds according to **A2** is then added, and then,
- in a third step, a second portion of the epoxide compound **A1** is added, and the reaction mass is reacted as above until all epoxide groups have been consumed,
- in a separate step, a curing agent is prepared from an at least difunctional isocyanate **B1** and a capping agent **B2** by first charging the capping agent **B2** and admixing a catalyst, the mixture is heated and the isocyanate **B1** is added in portions keeping the temperature constant, and reacting until the isocyanate groups are completely consumed,
- in the fourth step, the curing agent formed in the separate step is added to the reaction mixture, homogenised well, and the resulting homogeneous mixture is cooled and dispersed in water to which a neutralisation agent has been added prior to the addition of the homogenised mixture, and
- in a further optional step, diepoxide **A12** is added to the aqueous dispersion formed in the fourth step and reacted again until all epoxide groups have been consumed.

## Patentansprüche

1. Wässeriges Einbrennbindemittel, umfassend ein Gemisch AB aus einem Amid-modifizierten Epoxidaminaddukt A und einem verkappten Isocyanat B, das ein Allophanat als Strukturelement aufweist, wobei das Amid-modifizierte Epoxidaminaddukt A ein Reaktionsprodukt aus einer Epoxid-funktionellen Verbindung A1, aus einem Amidoamin A3, hergestellt aus einer Fettsäure A31 und einem Amin A32 mit mindestens zwei Aminogruppen, wobei zumindest eine eine primäre Aminogruppe ist, und aus Verbindungen A2 ist, die gegenüber Epoxidgruppen reaktiv sind, wobei die Verbindungen A2 aus Aminen A21 mit mindestens zwei Aminogruppen, wobei zumindest eine eine primäre Aminogruppe ist, aus phenolischen Verbindungen A22 mit mindestens zwei phenolischen Hydroxygruppen und aus organischen Säuren A23 ausgewählt sind, mit der Maßgabe, dass zumindest ein Amin A21 und zumindest eine phenolische Verbindung A22 in der Reaktion zur Herstellung des Addukts A verwendet werden.

2. Wässriges Einbrennbindemittel nach Anspruch 1, wobei die Epoxide A1 Monoepoxide A11 oder Diepoxide A12, gegebenenfalls in Kombination mit höherfunktionellen Epoxiden A13 mit drei oder mehr Epoxidgruppen pro Molekül, in einem Massenanteil von bis zu 10 %, basierend auf der Summe der Massen der Epoxidverbindungen, sind.

3. Wässeriges Einbrennbindemittel nach Anspruch 1, wobei das verkappte Isocyanat B mindestens zwei verkappte Isocyanatstrukturen -NH-CO-OR und mindestens eine Allophanatstruktur, R¹-NH-CO-NR²-CO-OR³, aufweist, wobei
R der Rest eines Hydroxy-funktionellen Verkappungsmittels B21, gewöhnlich auch als Blockiermittel, R-OH, bezeichnet, ausgewählt aus der Gruppe, bestehend aus linearen aliphatischen Monohydroxyverbindungen B211 mit 1 bis 20 Kohlenstoffatomen, verzweigten aliphatischen Monohydroxyverbindungen B212 mit 4 bis 20 Kohlenstoffatomen und cyclischen aliphatischen Monohydroxyverbindungen B213 mit 4 bis 20 Kohlenstoffatomen, ist, wobei bei jedem von B211, B212 und B213 eine oder mehrere Methylengruppen durch eine Ethergruppe, -O-, in einer solchen Weise ersetzt sein kann/können, dass zwei Ethergruppen durch mindestens zwei aufeinanderfolgende Methylengruppen, die gegebenenfalls substituierte, aromatische Monohydroxyverbindungen B214 und Dialkyl-oder Arylalkylketoxime B215 sein können, getrennt sind,
R¹ der Rest eines polyfunktionellen Isocyanats B11 mit n Isocyanatgruppen ist,
O=C=N-R¹-(N=C=O)ₙ₋₁,
R² der Rest eines polyfunktionellen Isocyanats B12 mit m Isocyanatgruppen ist,
O=C=N-R²-(N=C=O)ₘ₋₁,
wobei B11 und B12 identisch oder voneinander verschieden sein können und unabhängig voneinander aus der Gruppe ausgewählt sind, bestehend aus aromatischen polyfunktionellen Isocyanaten, aus heteroaromatischen polyfunktionellen Isocyanaten, aus aliphatischen polyfunktionellen Isocyanaten und aus gemischten aromatischen/aliphatischen polyfunktionellen Isocyanaten, wie meta-Xylylendiisocyanat, und wobei n und m jeweils ganzzahlige Werte von 2 oder mehr annehmen können, unabhängig von dem anderen in jedem Fall, vorzugsweise von 2 bis 10, und wobei es möglich ist, dass eine oder mehrere der Isocyanatgruppen in R¹ und/oder in R² durch Umsetzen mit einer Hydroxy-funktionellen Verbindung unter Bildung einer Urethangruppe oder durch Umsetzen mit einer Amino-funktionellen Verbindung unter Bildung einer Harnstoffgruppe verbraucht worden sein kann/können, und
R³ dasselbe wie R sein kann oder sich von R unterscheiden kann und der Rest einer Hydroxy-funktionellen Verbindung B22 der Formel R³-OH, ausgewählt aus der Gruppe, bestehend aus linearen aliphatischen Monohydroxyverbindungen B221 mit 1 bis 20 Kohlenstoffatomen, verzweigten aliphatischen Monohydroxyverbindungen B222 mit 4 bis 20 Kohlenstoffatomen und cyclischen aliphatischen Monohydroxyverbindungen B223 mit 4 bis 20 Kohlenstoffatomen, ist, wobei bei jedem von B221, B222 und B223 eine oder mehrere Methylengruppen durch eine Ethergruppe in einer solchen Weise ersetzt sein können, dass zwei Ethergruppen -O- von zumindest zwei aufeinanderfolgenden Methylengruppen, die gegebenenfalls substituierte, aromatische Monohydroxyverbindungen B224 und Dialkyl- oder Arylalkylketoxime B225 sein können, getrennt sind.

4. Wässeriges Einbrennbindemittel nach Anspruch 3, wobei die aromatischen polyfunktionellen Isocyanate aus der Gruppe ausgewählt sind, bestehend aus 1,4-Diisocyanatobenzol, 2,4- und 2,6-Diisocyanatotoluol, Gemischen aus diesen Isomeren, 4,4'-und 2,4'-Diisocyanatodiphenylmethan, 4,4'-Diisocyanatodiphenylpropan-(2,2), 1,2-, 1,4-, 2,3- und 1,8-Diisocyanatonaphthalin.

5. Wässeriges Einbrennbindemittel nach Anspruch 3, wobei die heteroaromatischen polyfunktionellen Isocyanate Derivate von Melamin oder Guanamine mit mindestens zwei Isocyanatgruppen pro Molekül sind.

6. Wässeriges Einbrennbindemittel nach Anspruch 3, wobei die gemischten aromatischen/aliphatischen polyfunktionellen Isocyanate aus der Gruppe ausgewählt sind, bestehend aus alpha,alpha,alpha',alpha'-Tetramethyl-m- und -p-xylylendiisocyanat und Gemischen, umfassend mindestens zwei dieser Verbindungen.

7. Wässeriges Einbrennbindemittel nach Anspruch 3, wobei die aliphatischen polyfunktionellen Isocyanate aus der Gruppe ausgewählt sind, bestehend aus 1,4-Tetramethylendiisocyanat, 1,6-Hexamethylendiisocyanat, 1,5-Diisocyanato-2-methyl-pentan, 1,8-Octamethylendiisocyanat, 2,2,4- und 2,4,4-Trimethylhexamethylen-1,6-diisocyanat, 1,12-Dodecamethylendiisocyanat, 1,4-Diisocyanatocyclohexan, 3-Isocyanatomethyl-3,5,5-trimethylcyclohexylisocyanat (Isophorondiisocyanat, IPDI), 4,4'-Diisocyanatodicyclohexylmethan, 4,4'-Diisocyanatodicyclohexylpropan-(2,2), 1,4-Diisocyanatobenzol, 2,4- oder 2,6-Diisocyanatotoluol und Gemischen dieser Isomere, 4,4'-oder 2,4'-Diisocyanatodiphenylmethan, 4,4'-Diisocyanatodiphenylpropan-(2,2), p-Xylylendiisocyanat, alpha,alpha,alpha',alpha'-Tetramethyl-m- oder -p-xylylendiisocyanat und Gemischen, umfassend diese Verbindungen.

8. Wässeriges Einbrennbindemittel nach Anspruch 3, wobei ein aliphatisches Isocyanat in Kombination mit Ketoximverkappungsmitteln B215 und B225 oder mit phenolischen Verkappungsmitteln B214 oder B224 verwendet wird.

9. Wässeriges Einbrennbindemittel nach Anspruch 3, wobei ein aromatisches Isocyanat in Kombination mit einem oder mehreren aliphatischen Verkappungsmitteln, ausgewählt aus der Gruppe, bestehend aus B211, B212, B213, B221, B222 und B223, wie in Anspruch 3 ausgeführt, verwendet wird.

10. Wässeriges Einbrennbindemittel nach Anspruch 2, wobei die Epoxide A1 aus der Gruppe ausgewählt sind, bestehend aus Monoepoxiden A1 und Diepoxiden A12, wobei die Monoepoxide A11 aus der Gruppe ausgewählt sind, bestehend aus Monoepoxyalkanen, Ethern von Glycidol mit mono funktionellen aliphatischen Alkoholen mit 4 bis 40 Kohlenstoffatomen und Glycidylestern von aliphatischen Monocarbonsäuren mit 5 bis 20 Kohlenstoffatomen, und wobei das Diepoxid A12 zwei Epoxidgruppen pro Molekül aufweist und aus der Gruppe ausgewählt ist, bestehend aus Diepoxyalkanen, Ethern von Glycidol mit Dihydroxyverbindungen, ausgewählt aus Dihydroxyalkanen mit 2 bis 20 Kohlenstoffatomen, aus oligomeren und polymeren Dihydroxyalkylenethern,
HO-[-(CH₂)ₙ-O-]ₘ-(CH₂)ₙ-OH
mit n = 2 bis 4 und m = 1 bis 1000, und aus Dihydroxy-aromatischen Verbindungen mit mindestens einem aromatischen Ring, Estern von Glycidol mit organischen Arylendisäuren und Alkylendisäuren mit jeweils 1 bis 40 Kohlenstoffatomen in dem Arylen- oder Alkylenrest, wobei letzterer linear, verzweigt oder cyclisch sein kann.

11. Wässeriges Einbrennbindemittel nach Anspruch 1, wobei das Amin A21 mindestens eine primäre oder sekundäre Aminogruppe aufweist, die an ein aliphatisches Kohlenstoffatom gebunden ist und 2 bis 40 Kohlenstoffatome aufweist.

12. Wässeriges Einbrennbindemittel nach Anspruch 1, wobei die phenolische Verbindung A22 eine Mono- oder Dihydroxy-aromatische Verbindung ist.

13. Wässeriges Einbrennbindemittel nach Anspruch 1, wobei die organische Säure A23 eine gesättigte oder eine ungesättigte aliphatische Monocarbonsäure mit 2 bis 40 Kohlenstoffatomen ist.

14. Wässeriges Einbrennbindemittel nach Anspruch 1, wobei das Amidoamin A3 mindestens eine primäre oder sekundäre Aminogruppe und mindestens eine Amidgruppe aufweist und von gesättigten oder ungesättigten Fettsäuren A31 mit 6 bis 40 Kohlenstoffatomen und von Aminen A32 mit mindestens zwei Aminogruppen abgeleitet ist, wobei mindestens eine eine primäre Aminogruppe, ausgewählt aus Aminen A321 mit mindestens einer primären und mindestens einer sekundären Aminogruppe und aus Aminen A322 mit mindestens zwei primären Aminogruppen, ist.

15. Verfahren zur Herstellung eines wässerigen Einbrennbindemittels nach Anspruch 1, umfassend die Schritte
- im ersten Schritt wird ein Fettsäureamidoamin A3 aus einer Fettsäure A31 und einem Amin A32 mit mindestens zwei Aminogruppen, wobei zumindest eine eine primäre Aminogruppe ist, hergestellt, wobei die Mengen der Reaktanten A31 und A32 so gewählt werden, dass das Amid A3 mindestens eine verbleibende primäre oder sekundäre Aminogruppe aufweist,
- Mischen dieser Amino-funktionellen Fettsäureamide A3 im zweiten Schritt mit mindestens zwei verschiedenen Verbindungen der Klasse A2, ausgewählt aus Aminen A21 mit mindestens zwei Aminogruppen, wobei mindestens eine eine primäre Aminogruppe ist, aus phenolischen Verbindungen A22 mit mindestens zwei phenolischen Hydroxygruppen und aus organischen Säuren A23, mit der Maßgabe, dass mindestens ein Amin A21 und mindestens eine phenolische Verbindung A22 verwendet werden und ein erster Teil eines monofunktionellen Epoxids A1 zugegeben wird und das so erhaltene Gemisch umgesetzt wird, bis keine Epoxidgruppen mehr detektiert werden können,
- in einem optionalen Schritt wird dann eine weitere Menge einer der Verbindungen gemäß A2 zugegeben, und dann
- wird in einem dritten Schritt ein zweiter Teil der Epoxidverbindung A1 zugegeben, und die Reaktionsmasse wird wie oben umgesetzt, bis alle Epoxidgruppen verbraucht worden sind,
- in einem separaten Schritt wird ein Härtungsmittel aus einem zumindest difunktionellen Isocyanat B1 und einem Verkappungsmittel B2 durch zunächst Eintragen des Verkappungsmittel B2 und Beimischen eines Katalysators hergestellt, das Gemisch wird erhitzt und das Isocyanat B1 wird portionsweise zugegeben, wobei die Temperatur konstant gehalten wird, und es wird umgesetzt, bis die Isocyanatgruppen vollständig verbraucht sind,
- im vierten Schritt wird das in dem separaten Schritt gebildete Härtungsmittel dem Reaktionsgemisch zugegeben, gut homogenisiert, und das resultierende homogene Gemisch wird abgekühlt und in Wasser dispergiert, dem vor der Zugabe des homogenisierten Gemisches ein Neutralisationsmittel zugegeben wurde, und
- in einem weiteren optionalen Schritt wird Diepoxid A12 der im vierten Schritt gebildeten wässerigen Dispersion zugegeben und erneut umgesetzt, bis alle Epoxidgruppen verbraucht worden sind.

## Revendications

1. Liant aqueux au four comprenant un mélange **AB** d'un produit d'addition époxy-amine modifié par amide **A** et d'un isocyanate coiffé **B** qui a un allophanate comme élément de structure, dans lequel le produit d'addition époxy-amine modifié par amide **A** est un produit réactionnel d'un composé à fonctionnalité époxyde **A1,** d'une amidoamine **A3** préparée à partir d'un acide gras **A31** et d'une amine **A32** ayant au moins au moins deux groupes amino, au moins l'un étant un groupe amino primaire, et de composés **A2** qui sont réactifs vis-à-vis de groupes époxyde lesquels composés **A2** sont choisis parmi les amines **A21** ayant au moins deux groupes amino, au moins l'un étant un groupe amino primaire, parmi les composés phénoliques **A22** ayant au moins deux groupes hydroxy phénoliques et parmi les acides organiques **A23,** à condition qu'au moins une amine **A21** et au moins un composé phénolique **A22** soient utilisés dans la réaction pour préparer le produit d'addition **A.**

2. Liant aqueux au four selon la revendication 1 dans lequel les époxydes **A1** sont des monoépoxydes **A11** ou des diépoxydes **A12,** facultativement en association avec des époxydes de fonctionnalité supérieure **A13** ayant trois ou plus de trois groupes époxyde par molécule, en une fraction massique allant jusqu'à 10 %, sur la base de la somme des masses de composés époxydes.

3. Liant aqueux au four selon la revendication 1 dans lequel l'isocyanate coiffé **B** a au moins deux structures isocyanates coiffées -NH-CO-OR et au moins une structure allophanate, R¹-NH-CO-NR²-CO-OR³, où
R est le résidu d'un agent de coiffage à fonctionnalité hydroxy **B21,** également communément appelé agent de blocage, R-OH, choisi dans le groupe constitué par les composés monohydroxy aliphatiques linéaires **B211** ayant de 1 à 20 atomes de carbone, les composés monohydroxy aliphatiques ramifiés **B212** ayant de 4 à 20 atomes de carbone et les composés monohydroxy aliphatiques cycliques **B213** ayant de 4 à 20 atomes de carbone, un plusieurs groupes méthylène, dans l'un quelconque de **B211, B212** et **B213,** pouvant être remplacés par un groupe éther, -O-, d'une manière telle que deux groupes éther sont séparés par au moins deux groupes méthylène consécutifs qui peuvent facultativement être substitués, les composés monohydroxy aromatiques **B214** et les dialkylcétone-oximes ou arylalkylcétone-oximes **B215,**
R¹ est le résidu d'un isocyanate polyfonctionnel **B11** ayant n groupes isocyanate,
O=C=N-R¹-(N=C=O)ₙ₋₁,
R² est le résidu d'un isocyanate polyfonctionnel **B12** ayant m groupes isocyanate,
O=C=N-R²- (N=C=O)ₘ₋₁,
où **B11** et **B12** peuvent être identiques ou peuvent être différents l'un de l'autre et sont indépendamment choisis dans le groupe constitué par les isocyanates polyfonctionnels aromatiques, parmi les isocyanates polyfonctionnels hétéroaromatiques, parmi les isocyanates polyfonctionnels aliphatiques et parmi les isocyanates polyfonctionnels mixtes aromatiques-aliphatiques tels que le diisocyanate de *méta-*xylylène et où n et m peuvent chacun prendre des valeurs entières supérieures ou égales à 2, indépendamment l'un de l'autre dans chaque cas, de préférence de 2 à 10, et où il est possible qu'un ou plusieurs des groupes isocyanate dans R¹ et/ou dans R² puissent avoir été consommés par réaction avec un composé à fonctionnalité hydroxy dans la formation d'un groupe uréthane ou par réaction avec un composé à fonctionnalité amino dans la formation d'un groupe urée, et
R³ peut être identique à R, ou il peut être différent de R, et est le résidu d'un composé à fonctionnalité hydroxy **B22** de formule R³-OH, choisi dans le groups constitué par les composés monohydroxy aliphatiques linéaires **B221** ayant de 1 à 20 atomes de carbone, les composés monohydroxy aliphatiques ramifiés **B222** ayant de 4 à 20 atomes de carbone et les composés monohydroxy aliphatiques cycliques **B223** ayant de 4 à 20 atomes de carbone, un plusieurs groupes méthylène, dans l'un quelconque de **B221, B222** et **B223,** pouvant être remplacés par un groupe éther d'une manière telle que deux groupes éther -0- sont séparés par au moins deux groupes méthylène consécutifs, qui peuvent facultativement être substitués, les composés monohydroxy aromatiques **B224** et les dialkylcétone-oximes ou arylalkylcétone-oximes **B225.**

4. Liant aqueux au four selon la revendication 3 dans lequel les isocyanates polyfonctionnels aromatiques sont choisis dans le groupe constitué par le 1,4-diisocyanatobenzène, le 2,4-diisocyanatotoluène et le 2,6-diisocyanatotoluène, les mélanges de ces isomères, le 4,4'-diisocyanatodiphénylméthane et le 2,4'-diisocyanatodiphénylméthane, le 2,2-bis(4-isocyanatophényl)propane, le 1,2-diisocyanatonaphtalène, le 1,4-diisocyanatonaphtalène, le 2,3-diisocyanatonaphtalène et le 1,8-diisocyanatonaphtalène.

5. Liant aqueux au four selon la revendication 3 dans lequel les isocyanates polyfonctionnels hétéroaromatiques sont des dérivés de mélamine ou de guanamines ayant au moins deux groupes isocyanate par molécule.

6. Liant aqueux au four selon la revendication 3 dans lequel les isocyanates polyfonctionnels mixtes aromatiques-aliphatiques sont choisis dans le groupe constitué par le m-diisocyanate d'α,α,α',α'-tétraméthylxylylène et le *p-*diisocyanate d'α,α,α',α'-tétraméthylxylylène et les mélanges comprenant au moins deux de ces composés.

7. Liant aqueux au four selon la revendication 3 dans lequel les isocyanates polyfonctionnels aliphatiques sont choisis dans le groupe constitué par le 1,4-diisocyanate de tétraméthylène, le 1,6-diisocyanate d'hexaméthylène, le 1,5-diisocyanato-2-méthylpentane, le 1,8-diisocyanate d'octaméthylène, le 1,6-diisocyanate de 2,2,4-triméthylhexaméthylène et le 1,6-diisocyanate de 2,4,4-triméthylhexaméthylène, le 1,12-diisocyanate de dodécaméthylène, le 1,4-diisocyanatocyclohexane, l'isocyanate de 3-isocyanatométhyl-3,5,5-triméthylcyclohexyle (le diisocyanate d'isophorone, IPDI), le 4,4'-diisocyanatodicyclohexylméthane, le 2,2-bis(4-isocyanatocyclohexyl)propane, le 1,4-diisocyanatobenzène, le 2,4-diisocyanatotoluène ou le 2,6-diisocyanatotoluène et les mélanges de ces isomères, le 4,4'-diisocyanatodiphénylméthane ou le 2,4'-diisocyanatodiphénylméthane, le 2,2-bis(4-isocyanatophényl)propane, le diisocyanate de *p-*xylylène, le *m*-diisocyanate d'α,α,α',α'-tétraméthylxylylène ou le *p*-diisocyanate d'α,α,α',α'-tétraméthylxylylène et les mélanges comprenant ces composés.

8. Liant aqueux au four selon la revendication 3 dans lequel un isocyanate aliphatique est utilisé en association avec des agents de coiffage cétoximes **B215** et **B225** ou avec des agents de coiffage phénoliques **B214** ou **B224.**

9. Liant aqueux au four selon la revendication 3 dans lequel un isocyanate aromatique est utilisé en association avec un ou plusieurs agents de coiffage aliphatiques choisis dans le groupe constitué par **B211, B212, B213, B221, B222** et **B223** tels que décrits dans le revendication 3.

10. Liant aqueux au four selon la revendication 2 dans lequel les époxydes **A1** sont choisis dans le groupe constitué par les monoépoxydes **A11** et les diépoxydes **A12,** les monoépoxydes **A11** étant choisis dans le groupe constitué par les monoépoxyalcanes, les éthers de glycidol avec des alcools aliphatiques monofonctionnels ayant de 4 à 40 atomes de carbone et les esters glycidyliques d'acides monocarboxyliques aliphatiques ayant de 5 à 20 atomes de carbone et le diépoxyde **A12** ayant deux groupes époxyde par molécule et étant choisi dans le groupe constitué par les diépoxyalcanes, les éthers de glycidol avec des composés dihydroxy choisis parmi les dihydroxyalcanes ayant de 2 à 20 atomes de carbone, parmi les dihydroxy(éthers d'alkylène) oligomères et polymères
HO-[-(CH₂)ₙ-O-]ₘ-(CH₂)ₙ-OH avec n = 2 à 4 et m = 1 à 1 000 et parmi les composés dihydroxy aromatiques ayant au moins un noyau aromatique, les esters de glycidol avec des arylènediacides et alkylènediacides organiques ayant chacun de 1 à 40 atomes de carbone dans le résidu arylène ou alkylène, ce dernier pouvant être linéaire, ramifié ou cyclique.

11. Liant aqueux au four selon la revendication 1 dans lequel l'amine **A21** a au moins un groupe amino primaire ou secondaire qui est lié à un atome de carbone aliphatique et a de 2 à 40 atomes de carbone.

12. Liant aqueux au four selon la revendication 1 dans lequel le composé phénolique **A22** est un composé monohydroxy ou dihydroxy aromatique.

13. Liant aqueux au four selon la revendication 1 dans lequel l'acide organique **A23** est un acide monocarboxylique aliphatique saturé ou insaturé ayant de 2 à 40 atomes de carbone.

14. Liant aqueux au four selon la revendication 1 dans lequel l'amidoamine **A3** a au moins un groupe amino primaire ou secondaire et au moins un groupe amide et est dérivée d'acides gras saturés ou insaturés **A31** ayant de 6 à 40 atomes de carbone et d'amines **A32** ayant au moins deux groupes amino, au moins l'un étant un groupe amino primaire, choisies parmi les amines **A321** ayant au moins un groupe amino primaire et au moins un groupe amino secondaire et parmi les amines **A322** ayant au moins deux groupes amino primaires.

15. Procédé pour fabriquer un liant aqueux au four selon la revendication 1 comprenant les étapes suivantes
- dans la première étape, une amidoamine d'acide gras **A3** est préparée à partir d'un acide gras **A31** et d'une amine **A32** ayant au moins deux groupes amino, au moins l'un étant un groupe amino primaire, les quantités des réactifs **A31** et **A32** étant choisies de façon telle que l'amide **A3** ait au moins un groupe amino primaire ou secondaire restant,
- le mélange de ces amides d'acide gras à fonctionnalité amino **A3** dans la deuxième étape avec au moins deux composé différents de la classe **A2** choisis parmi les amines **A21** ayant au moins deux groupes amino, au moins l'un étant un groupe amino primaire, parmi les composés phénoliques **A22** ayant au moins deux groupes hydroxy phénoliques et parmi les acides organiques **A23,** à condition qu'au moins une amine **A21** et au moins un composé phénolique **A22** soient utilisés, et une première partie d'un époxyde monofonctionnel **A1** est ajoutée et le mélange ainsi obtenu est amené à réagir jusqu'à ce que des groupes époxyde ne puissent plus être détectés,
- dans une étape facultative, une quantité supplémentaire de l'un des composés selon **A2** est ensuite ajoutée et, ensuite,
- dans une troisième étape, une seconde partie du composé époxyde **A1** est ajoutée et la masse réactionnelle est amenée à réagir comme ci-dessus jusqu'à ce que tous les groupes époxyde aient été consommés,
- dans une étape séparée, un agent durcisseur est préparé à partir d'un isocyanate au moins difonctionnel **B1** et d'un agent de coiffage **B2** par chargement d'abord de l'agent de coiffage **B2** et mélange d'un catalyseur, le mélange est chauffé et l'isocyanate **B1** est ajouté en plusieurs fois avec maintien de la température constante, et réaction jusqu'à ce que les groupes isocyanate soient totalement consommés,
- dans la quatrième étape, l'agent durcisseur formé dans l'étape séparée est ajouté au mélange réactionnel, bien homogénéisé et le mélange homogène résultant est refroidi et dispersé dans de l'eau à laquelle un agent de neutralisation a été ajouté avant l'ajout du mélange homogénéisé et
- dans une autre étape facultative, du diépoxyde **A12** est ajouté à la dispersion aqueuse formée dans la quatrième étape et amené à réagir à nouveau jusqu'à ce que tous les groupes époxyde aient été consommés.
